# EUROPEAN PATENT APPLICATION

(11) **EP 1 767 871 A1**
(43) Date of publication of application: **28.03.2007**
(21) Application number: 06121155.3
(22) Date of filing: 22.09.2006
(51) Int. Cl.: F24D 19/06

(54) **Radiator**

(30) Priority: 23.09.2005 IT BO20050574
(71) Applicant: IRSAP SPA, 45031 Arqua'Polesine (IT)
(72) Inventor: Zen, Alessandro, 45100 Rovigo (IT)
(74) Representative: Jorio, Paolo

(57) **Abstract**

The radiator comprises a heating member (2), defined by a plurality of pipes (3 and 4), within which a heating fluid flows. The main characteristic of the radiator consists in the fact that said radiator comprises a plurality of plates (5) that come to define the face in view of the heating member (2), which is provided with means (6) for supporting the plates (5) and for guiding the plates (5) during positioning thereof.

## Description

The present invention relates to a radiator of an improved type.

As is known, the radiators used for heating environments, and in particular flat radiators also constitute elements of furnishing. Now, manufacturing firms, in order to differentiate from one another, produce radiators with particular sections of the pipes and/or with particular developments of the longitudinal axes of said pipes. It appears evident, however, that, once the radiator has been purchased and installed, it is no longer possible to change its configuration and hence its appearance. It should be emphasized that, whereas the elements of furnishing (basically, the furniture) of an environment are, over time, frequently replaced by other elements of furnishing, the radiators, unless an unimaginable failure or wear thereof occurs, are elements that are hardly ever replaced by similar ones that might perhaps adapt better to the new furnishing.

The aim of the present invention consists in providing a radiator of an improved type that is provided with means that enable provision of a configuration of its own face in view and that enable change of said configuration as desired, with simple and rapid operations.

According to the present invention, a radiator of an improved type is provided, which comprises a heating member defined by a plurality of pipes within which a heating fluid flows, characterized in that it comprises a plurality of plates that come to define the face in view of said heating member, which is provided with means for supporting said plates and for guiding said plates during positioning thereof.

The present invention will now be described with reference to the annexed plate of drawings, which illustrates a preferred embodiment thereof and in which:
- Figure 1 is a perspective view, with parts removed, of a radiator provided according to the dictates of the present invention; and
- Figure 2 is an enlarged perspective view of a detail of the radiator of Figure 1.

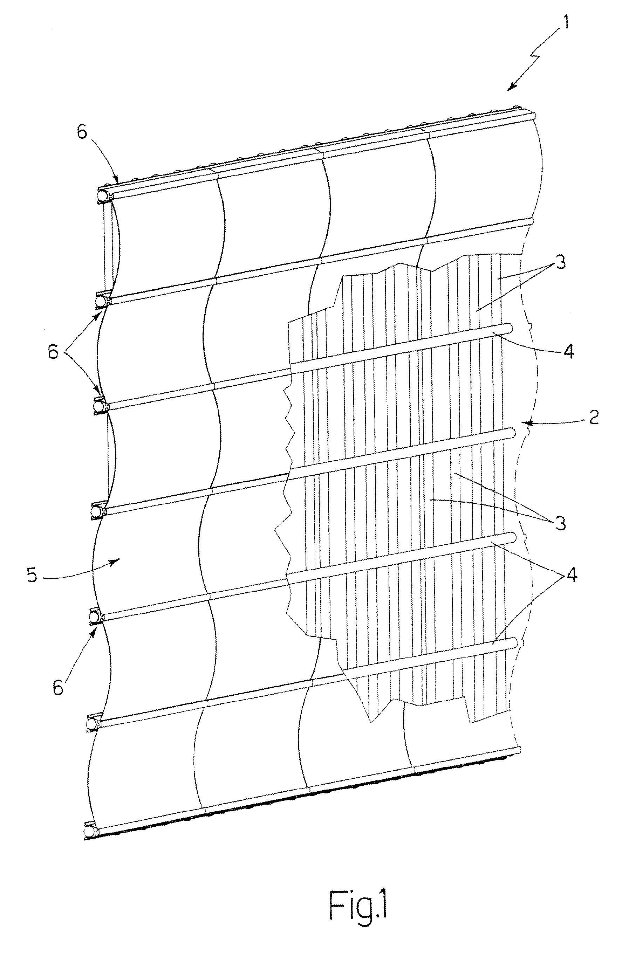

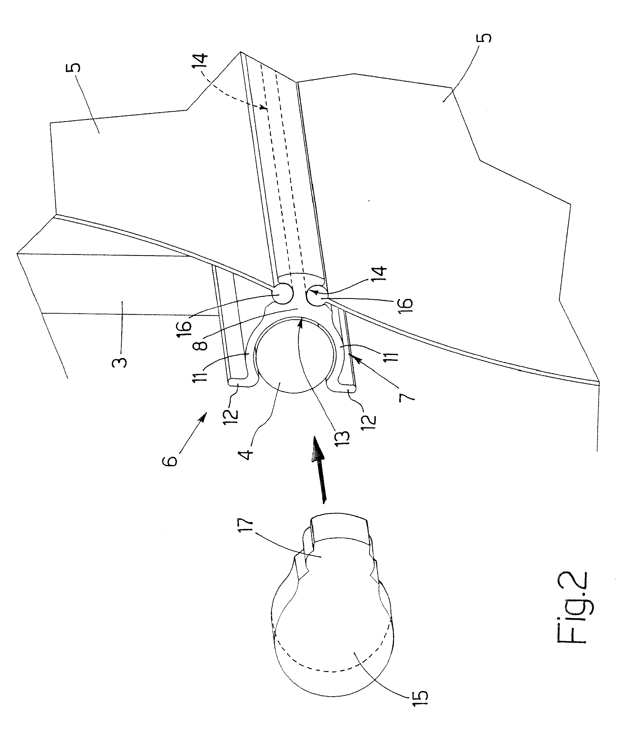

With reference to Figures 1 and 2, designated as a whole by 1 is a radiator of an improved type, which comprises:
- a heating member 2 defined by a plurality of pipes 3 and 4, within which a heating fluid flows;
- a plurality of plates 5, designed to define as a whole the face in view of the radiator 1; and
- means 6 for supporting the aforesaid plates 5 and guide means for positioning said plates 5.

The pipes 3 of the member 2 each have a vertical longitudinal axis, whilst the pipes 4 each have a horizontal longitudinal axis. In this example of embodiment, the pipes 3 lie in an internal vertical plane and more precisely in the plane facing the wall, to which the radiator 1 is then fixed. The pipes 4 lie in a vertical plane parallel to the one defined by the pipes 3, but facing the environment.

In this example of embodiment, the supporting means 6 are applied to the pipes 4 and are constituted by a metal sectional element 7 with semi-annular cross section that comes to embrace the respective pipe 4 throughout the length thereof. In cross section, the sectional element 7 has a central portion 8 and two elastically deformable arms 11 that embrace the corresponding pipe 4. The longitudinal free edges of the arms 11 are bent towards the outside of the sectional element 7 so as to define a respective tab 12, which, once the sectional element 7 is mounted, by snap action, on the pipe 4, prevents rotation of the sectional element 7 itself about the longitudinal axis of said pipe 4. Basically, defined in the sectional element 7 is a seat 13, engaged, by snap action, by the pipe 4 via a simple operation that involves pushing the sectional element 7 (of course, in an area corresponding to its opening) towards the pipe 4 until the latter engages the seat 13. Defined in the external surface of the central portion 8 and throughout the length of the sectional element 7 are two guides 14, constituted by respective horizontal grooves, one open downwards and the other open upwards. Each sectional element 7 is then provided with two plugs 15, mounted at the axial ends of the sectional element 7 itself.

A solution different from the one just described envisages the rigid arms 11 and installation of the sectional element 7 on the corresponding pipe 4 via translation of the sectional element 7 along the axis of the pipe 4, with this, of course, internal to the seat 13.

Each plate 5 has a rectangular perimetral profile with the top and bottom horizontal edges 16 enlarged, i.e., having a thickness greater than that of the remaining part of the plate 5. Said edges 16 come then to engage the guides 14 of the sectional elements 7. In this example of embodiment, the plates 5 are defined in a curved plane, but it appears evident that these can present different geometries.

Once the sectional elements 7 are installed in use, according to the modalities described above, the plates 5 are slid onto the corresponding pipes 4, along the guides 14, up to the position chosen for said plates. Next, the plugs 15 are mounted, which, as may be noted, not only close the axial ends of the sectional elements 7 but have an appendage 17 that comes to close the axial ends of both of the guides 14 of each sectional element 7.

From what has been described above, the advantages obtained with the embodiment of the present invention emerge clearly.

In particular, a radiator is provided, equipped with a system that enables, with simple and rapid operations, arrangement, on the heating member, of a plurality of plates that not only define a face in view of the radiator of high aesthetic value but also that, with the aforesaid plates, define a better and more effective diffusion of the heat towards the environment by precisely exploiting the large surface dimension of said face in view, constituted by the set of the plates. It should moreover be emphasized that either by varying the geometry of the plates and/or by varying the positioning of said plates it is possible to vary as desired the configuration of the face in view of the radiator to adapt it possibly to the general furnishing of the environment.

Finally, it is clear that modifications and variations can be made to the radiator 1 described and illustrated herein, without thereby departing from the sphere of protection of the present invention.

In particular, the systems for supporting and guiding the plates 5 may differ from the ones described; for example, for the heating members that have the pipes 4 at a short distance apart from one another, the sectional element 7 could be provided with two arms that are inserted between the two pipes and that each come to embrace a corresponding pipe 4. Furthermore, the plates 5 can be made of metal and/or of other materials, just as there could be some plates made of a first material and other plates made of a different material. Finally, the grooves defining the guides 14 could be made along the edges of the plates 5 and be engaged by appendages that originate from the sectional element 7.

## Claims

1. A radiator of an improved type, comprising a heating member (2) defined by a plurality of pipes (3 and 4), within which a heating fluid flows, **characterized in that** it comprises a plurality of plates (5) that come to define the face in view of said heating member (2), which is provided with means (6) for supporting said plates (5) and for guiding said plates (5) during positioning thereof.

2. The radiator according to Claim 1, **characterized in that** said means (6) comprise a sectional element (7) installed on some of said pipes (3 or 4).

3. The radiator according to Claim 2, **characterized in that** said sectional element (7) has a semi-annular cross section and defines within it a seat (13) engaged by a corresponding said pipe (4).

4. The radiator according to Claim 3, **characterized in that** said sectional element (7) has a central portion (8) and two arms (11) that come to embrace the corresponding said pipe (4).

5. The radiator according to Claim 4, **characterized in that** said arms (11) are elastically deformable.

6. The radiator according to Claim 4, **characterized in that** said arms (11) are rigid.

7. The radiator according to Claim 5 or Claim 6, **characterized in that** said central portion (8) has, in an area corresponding to its own external surface, two guides (14), constituted by respective horizontal grooves, one open downwards and the other open upwards, designed to be engaged, respectively, by the top edge (16) and by the bottom edge (16) of respective said plates (5).

8. The radiator according to Claim 7, **characterized in that** said top and bottom edges (16) of said plates (5) have a thickness greater than the thickness of the remaining part of said plates (5).

9. The radiator according to any one of Claims 3 to 8, **characterized in that** said sectional element (7) is provided with two plugs (15), mounted at the axial ends of the sectional elements (7) themselves.

10. The radiator according to any one of Claims 2 to 9, **characterized in that** said sectional element (7) has its own longitudinal horizontal axis.

11. The radiator according to any one of Claims 2 to 10, **characterized in that** said sectional element (7) is made of metal material.

12. The radiator according to any one of Claims 1 to 11, **characterized in that** said plates (5) are made of metal material.

13. The radiator according to any one of Claims 1 to 12, **characterized in that** said plates (5) have a rectangular perimetral profile.

14. The radiator according to any one of Claims 1 to 13, **characterized in that** said plates (5) lie in a curvilinear plane.
